# EUROPEAN PATENT APPLICATION

(11) **EP 2 644 429 A1**
(43) Date of publication of application: **02.10.2013**
(21) Application number: 13161018.0
(22) Date of filing: 26.03.2013
(51) Int. Cl.: B60K 17/356, B60K 6/52, F16D 11/14, F16D 28/00

(54) **Motor driving force transmission apparatus**

(30) Priority: 28.03.2012 JP 2012074612
(71) Applicant: JTEKT CORPORATION, Osaka-shi Osaka 542-8502 (JP)
(72) Inventor: Nomura, Keita, Osaka-shi,, Osaka 542-8502 (JP); Suzuki, Kunihiko, Osaka-shi,, Osaka 542-8502 (JP)
(74) Representative: TBK

(57) **Abstract**

In a motor driving force transmission apparatus, a cam mechanism includes an input cam member that rotates upon reception of motor torque from a cam actuating electric motor and an output cam member that outputs cam thrust force through movement due to rotation of the input cam member, and rotation of the output cam member around an axis of a housing is restricted by a restricting member fixed to the housing.

## Description

### BACKGROUND OF THE INVENTION

### 1. Field of the Invention

The invention relates to a motor driving force transmission apparatus that is suitable for use in, for example, an electric vehicle having an electric motor that serves as a driving source.

### 2. Description of Related Art

There is a conventional motor driving force transmission apparatus that is mounted in an automobile, and that includes an electric motor, a differential mechanism, a reduction-transmission mechanism, a clutch and a cam mechanism (see, for example, Japanese Patent Application Publication No. 2010-202191 (JP 2010-202191 A)). The electric motor generates motor torque. The differential mechanism distributes driving force based on the motor torque of the electric motor, to right and left wheels. The reduction-transmission mechanism reduces the speed of rotation output from the electric motor and then transmits driving force to the differential mechanism. The clutch couples the reduction-transmission mechanism and the differential mechanism to each other such that the reduction-transmission mechanism and the differential mechanism are disengageable from each other. The cam mechanism actuates the clutch.

The clutch includes a pair of clutch members that mesh with each other. The clutch members mesh with each other upon reception of cam thrust force that is generated through actuation of the cam mechanism.

The cam mechanism includes a pair of cam members that face each other (one of the cam members is a fixed cam, and the other one of the cam members is a movable cam) and rolling elements that roll between the cam members. The cam mechanism applies cam thrust force to the clutch when the cam mechanism is actuated.

With the above-described configuration, when cam thrust force is generated through actuation of the cam mechanism while the electric motor is being driven (rotated), the clutch is actuated upon reception of cam thrust force from the cam mechanism, and the reduction-transmission mechanism and the differential mechanism are coupled to each other. Thus, the torque output from the electric motor is transmitted to the differential mechanism via the reduction-transmission mechanism, and is distributed to the right and left wheels from the differential mechanism.

However, in the motor driving force transmission apparatus described in JP 2010-202191 A, the cam mechanism is actuated by moving only one of the cam members (movable cam) while rotating the one of the cam members. Therefore, the operation of the movable cam becomes complex. Therefore, depending on a travel state of the vehicle, shifting operation for shifting cam thrust force from a cam mechanism to a clutch may not be smoothly carried out. As a result, the timing at which the clutch is actuated may be largely restricted.

### SUMMARY OF THE INVENTION

It is an object of the invention to provide a motor driving force transmission apparatus that is able to smoothly carry out shifting operation for shifting cam thrust force from a cam mechanism to a clutch.

An aspect of the invention relates to a motor driving force transmission apparatus, including: a housing; an electric motor that is arranged in the housing so as to extend on an axis of the housing, and that generates motor torque; a differential mechanism that distributes driving force based on the motor torque of the electric motor; a reduction-transmission mechanism that reduces a speed of rotation transmitted from the electric motor, and then transmits the driving force to the differential mechanism; a clutch that couples the reduction-transmission mechanism and the differential mechanism to each other such that the reduction-transmission mechanism and the differential mechanism are disengageable from each other; and a cam mechanism that applies cam thrust force, which is used as clutch actuating force, to the clutch. The cam mechanism includes an input cam member that rotates upon reception of torque from a cam actuating driving source and an output cam member that outputs the cam thrust force through movement due to rotation of the input cam member. Rotation of the output cam member around the axis of the housing is restricted by a restricting member fixed to the housing.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a plan view for schematically illustrating a vehicle in which a motor driving force transmission apparatus according to an embodiment of the invention is mounted;
FIG. 2 is a sectional view for illustrating the entirety of the motor driving force transmission apparatus according to the embodiment of the invention;
FIG. 3 is a schematic sectional view for illustrating a reduction-transmission mechanism of the motor driving force transmission apparatus according to the embodiment of the invention; and
FIG. 4 is an enlarged sectional view that shows a portion M of the motor driving force transmission apparatus according to the embodiment of the invention.

### DETAILED DESCRIPTION OF EMBODIMENTS

Hereinafter, a motor driving force transmission apparatus according to an embodiment of the invention will be described in detail with reference to the accompanying drawings.

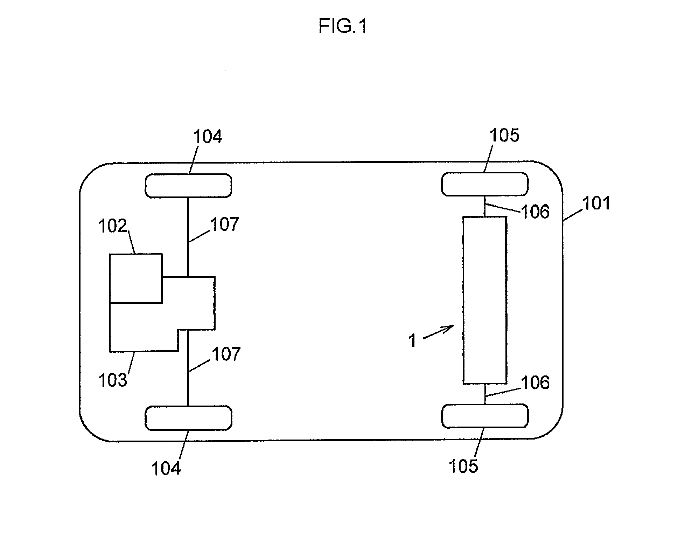

FIG. 1 schematically shows a four-wheel-drive vehicle 101. As shown in FIG. 1, the four-wheel-drive vehicle 101 includes a front wheel power system and a rear wheel power system. In the front wheel power system, an engine is used as a driving source. In the rear wheel power system, an electric motor is used as a driving source. The four-wheel-drive vehicle 101 includes a motor driving force transmission apparatus 1, the engine 102, a transaxle 103, a pair of front wheels 104, and a pair of rear wheels 105.

The motor driving force transmission apparatus 1 is arranged in the rear wheel power system of the four-wheel-drive vehicle 101, and is supported by a vehicle body (not shown) of the four-wheel-drive vehicle 101.

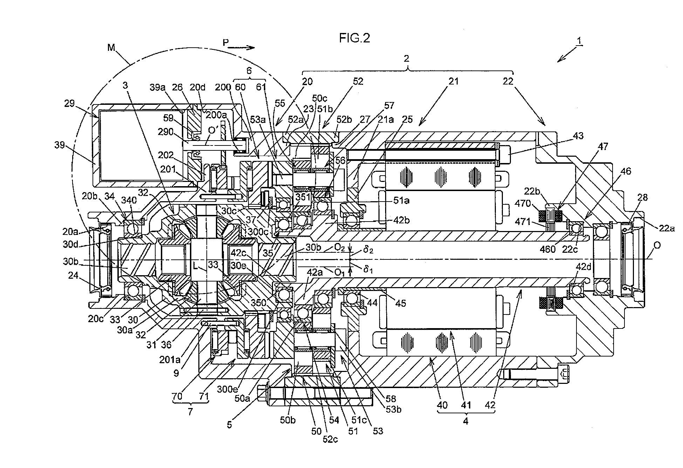

In the motor driving force transmission apparatus 1, the motor torque of the electric motor 4 is output to rear axle shafts 106 via a reduction-transmission mechanism 5 and a rear differential 3 (both are shown in FIG. 2), and the rear wheels 105 are driven. The details of, for example, the motor driving force transmission apparatus 1 will be described later.

The engine 102 is arranged in the front wheel power system of the four-wheel-drive vehicle 101. Thus, the driving force of the engine 102 is output to front axle shafts 107 via the transaxle 103, and the front wheels 104 are driven.

FIG. 2 shows the entirety of the motor driving force transmission apparatus 1. As shown in FIG. 2, the motor driving force transmission apparatus 1 is formed mainly of a housing 2, the rear differential 3, the electric motor 4, the reduction-transmission mechanism 5, a clutch 6, and a cam mechanism 7. The housing 2 has an axis O that coincides with the axis of each rear axle shaft 106 (shown in FIG. 1). The rear differential 3 distributes driving force based on the motor torque of the electric motor 4 to the rear wheels 105 (shown in FIG. 1). The electric motor 4 generates motor torque. The reduction-transmission mechanism 5 reduces the speed of rotation transmitted from the electric motor 4 and then transmits driving force to the rear differential 3. The clutch 6 couples the reduction-transmission mechanism 5 and the rear differential 3 to each other such that the reduction-transmission mechanism 5 and the rear differential 3 are disengageable from each other. The cam mechanism 7 applies cam thrust force P, which is used as clutch actuating force, to the clutch 6.

The housing 2 has a rotation force applying member 52 (described later), a first housing element 20, a second housing element 21 and a third housing element 22. The housing 2 is fitted to the vehicle body. The first housing element 20 accommodates the rear differential 3. The second housing element 21 accommodates the electric motor 4. The third housing element 22 closes the one-side opening portion (an opening portion on the opposite side of the housing element 21 from a first housing element 20-side opening portion) of the second housing element 21.

The first housing element 20 has a shaft support portion 200, a pin fitting portion 201 and a bearing receiving portion 202. The first housing element 20 is arranged at the axial one side (left side in FIG. 2) of the housing 2. The first housing element 20 is formed of a stepped closed-end cylindrical member that is open toward the second housing element 21. The bottom portion of the first housing element 20 has a shaft insertion hole 20a and an inner flange 20b. One of the rear axle shafts 106 (shown in FIG. 1) is passed through the shaft insertion hole 20a. The inner flange 20b protrudes radially inward from the inner periphery of the first housing element 20, which defines the shaft insertion hole 20a. The inner flange 20b has an annular cutout 20c that is open at the second housing element 21-side flange end face, which is one of both flange end faces of the inner flange 20b, and that is also open into the shaft insertion hole 20a. An annular protrusion 23 that protrudes toward the second housing element 21 is formed integrally on the open end face of the first housing element 20. The outer periphery of the protrusion 23 has an outside diameter smaller than the maximum outside diameter of the first housing element 20, and is formed of a peripheral face of which the central axis coincides with the axis O. A seal member 24 is interposed between the inner periphery of the first housing element 20 and the outer periphery of the rear axle shaft 106. The seal member 24 seals the shaft insertion hole 20a.

The first housing element 20 has a through-hole 20d that is open toward both sides in the direction of an axis O' that is parallel to the axis O. In addition, an annular lid member 26 that closes the through-hole 20d is attached to the first housing element 20. The lid member 26 is arranged at a position at which the lid member 26 covers part of the bearing receiving portion 202. A motor housing 39 is fitted to the lid member 26. The motor housing 39 accommodates an electric motor 29 that serves as a cam actuating driving source for generating torque (motor torque). The motor housing 39 is formed of a closed-end cylindrical member that has an opening portion 39a closed by the lid member 26 and that has a central axis which coincides with the axis O'.

The shaft support portion 200 is formed at the axial other-side (right-side in FIG. 2) end portion of the first housing element 20, and protrudes radially inward. The shaft support portion 200 has a recessed hole 200a formed of a round hole that has a central axis which coincides with the axis O' and that is open toward the motor housing 39.

The pin fitting portion 201 is arranged at the axially intermediate portion of the first housing element 20 so as to be located radially outward of the rear differential 3. The pin fitting portion 201 is formed of a cylindrical member that is open into the first housing element 20 and that has a central axis which coincides with the axis O. Multiple (three in the present embodiment) recessed holes 201a are formed in the pin fitting portion 201. The recessed holes 201a are open toward the axial other side (right side in FIG. 2) of the first housing element 20 and are arranged at equal intervals around the axis O. Restricting members 9 are fitted into the recessed holes 201a. The restricting members 9 each are formed of a pin that protrudes toward the clutch 6 and of which the distal end portion is exposed to the inside of the first housing element 20.

The restricting members 9 are, for example, press-fitted into the corresponding recessed holes 201a, and are fixed to the first housing element 20. The restricting members 9 are arranged at equal intervals around the axis O. The number of the restricting members 9 is equal to the number of the recessed holes 201a. Thus, the rotation of an output cam member 71 (described later) of the cam mechanism 7 around the axis O is restricted.

The bearing receiving portion 202 is formed at the axially intermediate portion (pin fitting portion 201) of the first housing element 20 so as to protrude radially outward. The entirety of the bearing receiving portion 202 is formed of an annular member having a central axis that coincides with the axis O.

The cam actuating electric motor 29 has a motor shaft 290 that protrudes toward the second housing element 21, and is arranged on the axis O'. The motor shaft 290 is passed through the lid member 26, and the distal end portion of the motor shaft 290 is rotatably supported in the recessed hole 200a of the shaft support portion 200 via a needle roller bearing 49. A seal member 59 is interposed between the outer periphery of the motor shaft 290 and the inner periphery of the lid member 26. In addition, in the housing 2 (first housing element 20), a drive gear 8 formed of a spur gear is fitted to the motor shaft 290.

The second housing element 21 is located at the axially intermediate portion of the housing 2. The entirety of the second housing element 21 is formed of an open-end cylindrical member that is open toward both sides in the direction of the axis O. A stepped inner flange 21a that is located between the electric motor 4 and the reduction-transmission mechanism 5 is formed integrally on the one-side opening portion (first housing element 20-side opening portion) of the second housing element 21. An annular member 25, to which a race is fitted, is fitted to the inner periphery of the inner flange 21a. An annular protrusion 27 that protrudes toward the first housing element 20 is formed integrally on the one-side open end face (first housing element 20-side open end face) of the second housing element 21. The outer periphery of the protrusion 27 has an outside diameter that is smaller than the maximum outside diameter of the second housing element 21. The outer periphery of the protrusion 27 has substantially the same outside diameter as that of the protrusion 23, and is formed of a peripheral face of which the central axis coincides with the axis O.

The third housing element 22 is located at the axial other side (right side in FIG. 2) of the housing 2. The entirety of the third housing element 22 is formed of a stepped closed-end cylindrical member that is open toward the second housing element 21. The bottom portion of the third housing element 22 has a shaft insertion hole 22a through which the other one of the rear axle shafts 106 is passed. A cylindrical portion 22b, to which a stator is fitted and which protrudes toward the electric motor 4, is formed integrally with the inner open periphery of the shaft insertion hole 22a. A seal member 28 that seals the shaft insertion hole 22a is interposed between the inner periphery of the third housing element 22 and the outer periphery of the other one of the rear axle shafts 106. The third housing element 22 has an annular stepped face 22c that restricts movement of a ball bearing 46 (outer ring 461) in a direction opposite to the direction toward the reduction-transmission mechanism 5.

The rear differential 3 is formed of a differential case 30, a pinion gear shaft 31 and a bevel gear differential mechanism. The bevel gear differential mechanism includes a pair of pinion gears 32 and a pair of side gears 33. The rear differential 3 is arranged at the axial one side (left side in FIG. 2) of the motor driving force transmission apparatus 1.

Thus, the torque of the differential case 30 is distributed from the pinion gear shaft 31 to the side gears 33 via the pinion gears 32. The torque of the differential case 30 is further transmitted from the side gears 33 to the right and left rear wheels 105 (shown in FIG. 1) via the rear axle shafts 106 (shown in FIG. 1).

If there occurs a difference in driving resistance between the right and left rear wheels 105, the torque of the differential case 30 is differentially distributed to the right and left rear wheels 105 due to the rotation of the pinion gears 32.

The differential case 30 is arranged on the axis O of the housing 2. The differential case 30 is rotatably supported by the first housing element 20 via a ball bearing 34, and is rotatably supported by a motor shaft 42 of the electric motor 4 via a ball bearing 35. The differential case 30 rotates around the axis O upon reception of driving force based on the motor torque of the electric motor 4 from the reduction-transmission mechanism 5.

The differential case 30 has an accommodation space 30a and a pair of shaft insertion holes 30b. The accommodation space 30a accommodates a differential mechanism unit (the pinion gear shaft 31, the pinion gears 32 and the side gears 33). The shaft insertion holes 30b communicate with the accommodation space 30a. The right and left rear axle shafts 106 are fitted into the respective shaft insertion holes 30b.

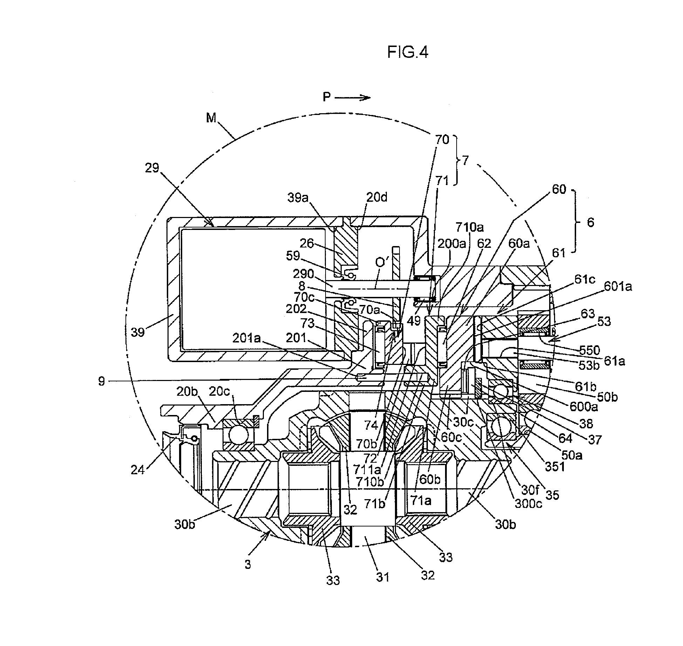

A straight spline fitting portion 30c is formed at the axial other-side end portion (electric motor 4-side end portion) of the differential case 30. The straight spline fitting portion 30c is exposed to the inside of the housing 2 (first housing element 20). A ring fitting portion 300c, to which a snap ring 37 is fitted, is formed at the straight spline fitting portion 30c by forming a cutout in each spline tooth. The ring fitting portion 300c is formed in the outer periphery of the differential case 30 so as to extend in the direction around the axis O. An annular recessed hole 30e and an annular stepped face 30f (shown in FIG. 4) are formed at the axial other-side end portion of the differential case 30. The annular recessed hole 30e is open toward the reduction-transmission mechanism 5. A ball bearing 38 (shown in FIG. 4) is fitted to the stepped face 30f. An annular stepped face 300e is formed in the recessed hole 30e. The stepped face 300e restricts movement of the ball bearing 35 (outer ring 351) toward the differential case 30. An annular stepped face 30d is formed at the axial one-side end portion of the differential case 30. The stepped face 30d restricts movement of the ball bearing 34 (inner ring 340) toward the motor shaft 42.

The pinion gear shaft 31 is arranged along an axis L that is perpendicular to the axis O in the accommodation space 30a of the differential case 30. The rotation of the pinion gear shaft 31 around the axis L and the movement of the pinion gear shaft 31 in the direction of the axis L are restricted by a pin 36.

The pinion gears 32 are rotatably supported by the pinion gear shaft 31, and are accommodated in the accommodation space 30a of the differential case 30.

The side gears 33 are accommodated in the accommodation space 30a of the differential case 30. The side gears 33 are coupled by spline fitting to the rear axle shafts 106 (shown in FIG. 1) that are passed through the shaft insertion holes 30b. In addition, the side gears 33 are meshed with the pinion gears 32 with the gear axes of the side gears 33 extending perpendicularly to the gear axes of the pinion gears 32.

The electric motor 4 includes a stator 40, a rotor 41 and the motor shaft 42 (the motor shaft having eccentric portions). The electric motor 4 is coupled to the rear differential 3 via the reduction-transmission mechanism 5 and the clutch 6 on the axis O. The electric motor 4 is connected to an electronic control unit (ECU) (not shown). In the electric motor 4, the stator 40 receives a control signal from the ECU, motor torque for actuating the rear differential 3 is generated through operation of the stator 40 and the rotor 41, and the rotor 41 is rotated together with the motor shaft 42.

The stator 40 is arranged at the radially outer side portion of the electric motor 4, and is fitted to the inner flange 21a of the second housing element 21 with a fitting bolt 43.

The rotor 41 is arranged at the radially inner side portion of the electric motor 4, and is fitted to the outer periphery of the motor shaft 42.

The motor shaft 42 is arranged on the axis O. The entirety of the motor shaft 42 is formed of a cylindrical shaft member through which the other one of the rear axle shafts 106 (shown in FIG. 1) is passed. In addition, the one-side (left-side in FIG. 2) end portion of the motor shaft 42 is rotatably supported by the inner periphery of the annular member 25 via a ball bearing 44 and a sleeve 45, and the other-side (right-side in FIG. 2) end portion of the motor shaft 42 is rotatably supported by the inner periphery of the third housing element 22 via a ball bearing 46.

An eccentric portion 42a and an eccentric portion 42b, both of which are circular in planar view, are formed integrally with the axial one-side end portion of the motor shaft 42. The eccentric portion 42a has an axis O₁ that is offset by an eccentric amount δ1 from the axis (axis O) of the motor shaft 42. The eccentric portion 42b has an axis O₂ that is offset by an eccentric amount δ2 (δ1 = δ2 = δ) from the axis O. An annular stepped face surface 42c is formed at the axial one-side end portion of the motor shaft 42. The stepped face 42c restricts movement of the ball bearing 35 (inner ring 350) toward the reduction-transmission mechanism 5. The eccentric portion 42a and the eccentric portion 42b are arranged so as to be apart from each other in the circumferential direction around the axis O at equal intervals (180°). That is, the eccentric portion 42a and the eccentric portion 42b are arranged on the outer periphery of the motor shaft 42 such that the distance from the axis O₁ to the axis O and the distance from the axis O₂ to the axis O are equal to each other and the distance between the axis O₁ and the axis O₂ in one of the circumferential directions around the axis O and the distance between the axis O₁ and the axis O₂ in the other circumferential direction around the axis O are equal to each other. The eccentric portion 42a and the eccentric portion 42b are arranged so as to be next to each other along the axis O.

A resolver 47 is arranged at the axial other-side end portion of the motor shaft 42. The resolver 47 serves as a rotation angle detector, and is interposed between the outer periphery of the motor shaft 42 and the inner periphery of the cylindrical portion 22b. An annular stepped face 42d is formed at the axial other-side end portion of the motor shaft 42. The stepped face 42d restricts movement of the ball bearing 46 (inner ring 460) toward the reduction-transmission mechanism 5. The resolver 47 has a stator 470 and a rotor 471, and is accommodated in the third housing element 22. The stator 470 is fitted to the inner periphery of the cylindrical portion 22b. The rotor 471 is fitted to the outer periphery of the motor shaft 42.

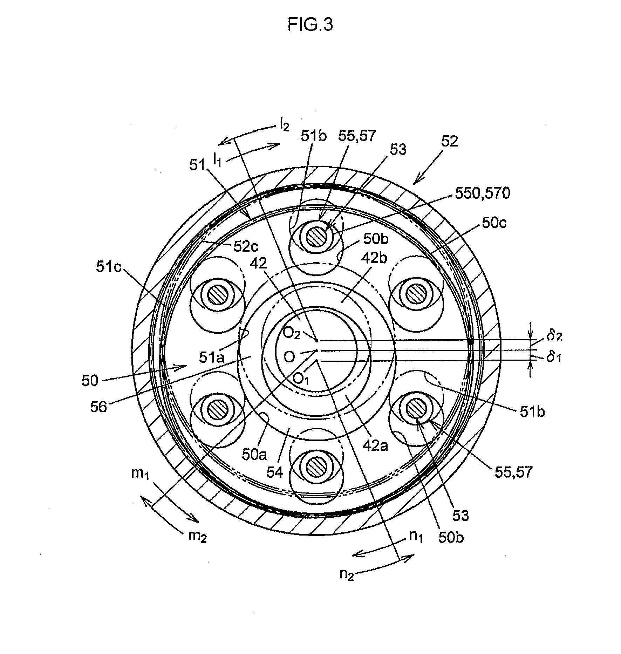

FIG. 3 shows the reduction-transmission mechanism. As shown in FIG. 2 and FIG. 3, the reduction-transmission mechanism 5 includes input members 50, 51, the rotation force applying member 52 and output members 53. The reduction-transmission mechanism 5 is interposed between the rear differential 3 and the electric motor 4. As described above, the reduction-transmission mechanism 5 reduces the speed of rotation transmitted from the electric motor 4 and then transmits driving force to the rear differential 3.

The input member 50 is formed of an external gear that has a center hole 50a of which the central axis coincides with the axis O₁. The input member 50 is arranged so as to be closer to the rear differential 3 than the input member 51. In addition, the input member 50 is rotatably supported by the motor shaft 42 via a ball bearing 54 that is interposed between the inner periphery of the input member 50, which defines the center hole 50a, and the outer periphery of the eccentric portion 42a. The input member 50 makes circular motion (revolving motion around the axis O) in the direction of the arrows m₁, m₂ with the eccentric amount δ, upon reception of motor torque from the electric motor 4.

The input member 50 has a plurality of (six in the present embodiment) pin insertion holes 50b that are arranged around the axis O₁ at equal intervals. The hole diameter of each pin insertion hole 50b is set to a value that is larger than a value obtained by adding the outside diameter of a needle roller bearing 55 to the outside diameter of each output member 53. External teeth 50c, having an involute tooth profile, are formed on the outer periphery of the input member 50, of which the central axis coincides with the axis O₁. The number Z1 of the external teeth 50c is set to 195 (Z1 = 195), for example.

The input member 51 is formed of an external gear having a center hole 51a of which the central axis coincides with the axis O₂*.* The input member 51 is arranged so as to be closer to the electric motor 4 than the input member 50. The input member 51 is rotatably supported by the motor shaft 42 via a ball bearing 56 that is interposed between the inner periphery of the input member 51, which defines the center hole 51a, and the outer periphery of the eccentric portion 42b. The input member 51 makes circular motion (revolving motion about the rotation axis O) in the direction of arrows m₁, m₂ with the eccentric amount δ, upon reception of motor torque from the electric motor 4.

The input member 51 has a plurality of (six in the present embodiment) pin insertion holes 51b that are arranged at equal intervals around the axis O₂. The hole diameter of each pin insertion hole 51b is set to a value that is larger than a value obtained by adding the outside diameter of a needle roller bearing 57 to the outside diameter of each output member 53. External teeth 51c, having an involute tooth profile. are formed on the outer periphery of the input member 51, of which the central axis coincides with the axis O₂. The number Z2 (Z2 = Z1) of the external teeth 51c is set to 195, for example.

The rotation force applying member 52 is formed of an internal gear of which the central axis coincides with the axis O. The rotation force applying member 52 is interposed between the first housing element 20 and the second housing element 21. The rotation force applying member 52 is formed of an open-end cylindrical member that constitutes part of the housing 2. The open-end cylindrical member is open toward both sides in the direction of the axis O. The rotation force applying member 52 is in mesh with the input members 50, 51, and applies rotation force in the direction of an arrow n₁ or an arrow n₂ to the input member 50 that revolves upon reception of the motor torque from the electric motor 4 and applies rotation force in the direction of an arrow l₁ or an arrow l₂ to the input member 51 that revolves upon reception of the motor torque from the electric motor 4.

The inner periphery of the rotation force applying member 52 has a first fitting portion 52a and a second fitting portion 52b at a predetermined interval in the direction of the axis O. The first fitting portion 52a is fitted to the outer periphery of the protrusion 23. The second fitting portion 52b is fitted to the outer periphery of the protrusion 27. In addition, the inner periphery of the rotation force applying member 52 has internal teeth 52c having an involute tooth profile. The internal teeth 52c are located between the first fitting portion 52a and the second fitting portion 52b, and are in mesh with the external teeth 50c of the input member 50 and the external teeth 51c of the input member 51. The number Z3 of the internal teeth 52c is set to 208, for example. The reduction gear ratio α of the reduction-transmission mechanism 5 is calculated according to α = Z2/(Z3 - Z2).

The output members 53 are formed of multiple (six in the present embodiment) bolts each having a threaded portion 53a at one end and a head 53b at the other end. The threaded portions 53a of the output members 53 are passed through the pin insertion holes 50b of the input member 50 and the pin insertion holes 51b of the input member 51 and then fitted to the other-side (right-side in FIG. 2) clutch element 61 (described later) of the clutch 6. In addition, the output members 53 are arranged at equal intervals around the axis O so as to be passed through an annular spacer 58 that is interposed between each head 53b and the input member 51. The output members 53 receive rotation force, applied by the rotation force applying member 52, from the input members 50, 51 and then output the rotation force to the differential case 30 as the torque of the differential case 30 when the rear differential 3 is coupled to the reduction-transmission mechanism 5 through actuation of the clutch 6.

The needle roller bearing 55 and the needle roller bearing 57 are fitted to the outer periphery of each output member 53 at a portion between the threaded portion 53a and the head 53b. The needle roller bearing 55 is used to reduce contact resistance between each output member 53 and the inner periphery of the input member 50, which defines the corresponding pin insertion hole 50b. The needle roller bearing 57 is used to reduce contact resistance between each output member 53 and the inner periphery of the input member 51, which defines the corresponding pin insertion hole 51b.

FIG. 4 shows a relevant portion of the motor driving force transmission apparatus. As shown in FIG. 4, the clutch 6 is formed of a dog clutch having a pair of clutch elements 60, 61 that face each other. The clutch 6 is arranged radially outward of the axial other-side end portion (electric motor 4-side end portion) of the differential case 30.

The clutch element 60 has two annular portions, that is, a large annular portion 60a and a small annular portion 60b (large-diameter annular portion 60a, small-diameter annular portion 60b) having outside diameters that differ from each other. The clutch element 60 is located at the cam mechanism 7-side portion of the clutch 6. The clutch element 60 is coupled to the axial other-side (right-side in FIG. 4) end portion of the differential case 30 so as to be non-rotatable but movable relative to the differential case 30. The clutch element 60 is rotatably supported by the output cam member 71 of the cam mechanism 7 via a needle roller bearing 62. The clutch element 60 is formed of an annular member through which the axial other-side end portion of the differential case 30 is passed. A straight spline fitting portion 60c is formed on the inner periphery of the clutch element 60. The straight spline fitting portion 60c is fitted to the straight spline fitting portion 30c of the differential case 30. Restoring force toward the cam mechanism 7 is applied to the clutch element 60 by the spring force of a return spring 63. For example, a wave washer is used as the return spring 63. The return spring 63 is arranged radially outward of the straight spline fitting portion 30c of the differential case 30, at a position between the clutch element 60 and a receiving member 64.

The large-diameter annular portion 60a is located at the axial other side (reduction-transmission mechanism 5 side) portion of the clutch element 60. A cutout 600a is formed in the large-diameter annular portion 60a. The cutout 600a is open toward the reduction-transmission mechanism 5 in the axial direction of the clutch element 60 and is open toward the differential case 30 in the radial direction of the clutch element 60. The cutout 600a functions as an accommodation space that accommodates the return spring 63 and the receiving member 64. The receiving member 64 is formed of an annular member which is interposed between the clutch element 60 and the snap ring 37 together with the return spring 63 and through which the straight spline fitting portion 30c of the differential case 30 is passed. A meshing lug portion 601a is formed at the outer peripheral edge (reduction-transmission mechanism 5-side end face) of the large-diameter annular portion 60a. The meshing lug portion 601a is exposed on the clutch element 61 side.

The small-diameter annular portion 60b is located at the axial one side (cam mechanism 7 side) portion of the clutch element 60.

The clutch element 61 is located at the reduction-transmission mechanism 5-side portion of the clutch 6, and is rotatably supported by the axial other-side (right-side in FIG. 4) end portion of the differential case 30 via the ball bearing 38. The clutch element 61 has a plurality of (six in the present embodiment) threaded holes 61a into which the threaded portions 53a of the output members 53 are screwed. The threaded holes 61a are arranged at equal intervals around the axis O. The clutch element 61 has a cutout 61b that is open toward the cam mechanism 7 in the axial direction and is open toward the differential case 30 in the radial direction, and that communicates with the cutout 600a of the clutch element 60 (large-diameter annular portion 60a). A meshing lug portion 61c is formed at the outer peripheral edge (cam mechanism 7-side end face) of the clutch element 61. The meshing lug portion 61c is exposed on the clutch element 60 side, and meshes with the meshing lug portion 601a.

The cam mechanism 7 includes an input cam member 70, the output cam member 71 and rolling elements 72. The input cam member 70 rotates upon reception of motor torque from the cam actuating electric motor 29. The output cam member 71 outputs cam thrust force P through movement due to rotation of the input cam member 70. The rolling elements 72 roll between the output cam member 71 and the input cam member 70. In the first housing element 20, the cam mechanism 7 is interposed between the bearing receiving portion 202 and the clutch element 60 and is arranged radially outward of the differential case 30.

The input cam member 70 is rotatably supported by the bearing receiving portion 202 via the needle roller bearing 73, at a position radially outward of the restricting members 9. The input cam member 70 is coupled to the cam actuating electric motor 29 (motor shaft 290) via a gear mechanism 74. External teeth 70a are formed on the outer periphery of the input cam member 70. The external teeth 70a mesh with the drive gear 8. The external teeth 70a constitute the gear mechanism 74 together with the drive gear 8. The axial other-side (right-side in FIG. 4) end face of the input cam member 70 is formed of a raceway surface 70b on which the rolling elements 72 roll. An annular protrusion 70c is formed on the axial one-side (left-side in FIG. 4) end face of the input cam member 70. The protrusion 70c has an inner periphery that faces the outer periphery of the pin fitting portion 201 via the needle roller bearing 73.

The output cam member 71 has two annular portions, that is, a large annular portion 71a and a small annular portion 71b (large-diameter annular portion 71a, small-diameter annular portion 71b) having diameters that differ from each other. The output cam member 71 is rotatably supported by the clutch element 60 (large-diameter annular portion 60a) of the clutch 6 via the needle roller bearing 62.

The large-diameter annular portion 71a is located at the axial other side (reduction-transmission mechanism 5 side) portion of the output cam member 71. An annular protrusion 710a is formed on the axial other-side (right-side in FIG. 4) end portion of the large-diameter annular portion 71a. The protrusion 710a has an inner periphery that faces the outer periphery of the small-diameter annular portion 60b via the needle roller bearing 62. Multiple cam surfaces 711a are formed on the axial one-side (left-side in FIG. 4) end face of the large-diameter annular portion 71a. The cam surfaces 711a are arranged in the circumferential direction, and serve as rolling surfaces on which the rolling elements 72 roll. The cam surfaces 711a are arranged at equal intervals in the circumferential direction of the output cam member 71. The cam surfaces 711a each are formed of a concave surface of which the depth in the axial direction gradually decreases from the neutral position along the circumferential direction of the output cam member 71.

The small-diameter annular portion 71b is arranged at the axial one side (side opposite to the reduction-transmission mechanism 5) portion of the output cam member 71. The small-diameter annular portion 71b has recessed holes 710b that accommodate portions (distal end portions) of the restricting members 9. Thus, the output cam member 71 is guided in the direction of the axis O along the restricting members 9. The accommodation length over which each restricting member 9 is accommodated in a corresponding one of the recessed holes 710b is set to a value that is larger than the axial moving stroke of the output cam member 71. This prevents the restricting members 9 from slipping out of the recessed holes 710b at the time when the output cam member 71 moves in the axial direction.

The rolling elements 72 are formed of, for example, cylindrical rollers. Multiple (three in the present embodiment) rolling elements 72 are interposed between the raceway surface 70b of the input cam member 70 and the cam surfaces 711a of the output cam member 71, and are rollably retained by a retainer (not shown). Balls may be used as the rolling elements 72 instead of the cylindrical rollers.

Next, the operation of the motor driving force transmission apparatus according to the present embodiment will be described with reference to FIG. 1 to FIG. 3.

In a state where the rear differential 3 is not coupled to the reduction-transmission mechanism 5 in the motor driving force transmission apparatus 1, when the cam actuating electric motor 29 is driven, the cam mechanism 7 is actuated. Cam thrust force P that is generated through the actuation of the cam mechanism 7 acts on the output cam member 71. Accordingly, the output cam member 71 moves toward the reduction-transmission mechanism 5, and presses the clutch element 60 of the clutch 6. Therefore, the clutch element 60 moves toward the reduction-transmission mechanism 5 (toward the clutch element 61) against the spring force of the return spring 63. Then, the meshing lug portion 601a of the clutch element 60 and the meshing lug portion 61c of the clutch element 61 mesh with each other. Thus, the rear differential 3 is coupled to the reduction-transmission mechanism 5, and the motor torque of the electric motor 4 is transmitted to the rear differential 3 via the reduction-transmission mechanism 5 and used as driving force for starting or accelerating the four-wheel-drive vehicle 101.

More specifically, in FIG. 2, when the electric motor 4 is driven by supplying electric power to the electric motor 4 in a state where the rear differential 3 is coupled to the reduction-transmission mechanism 5 in the motor driving force transmission apparatus 1 (in a state where electric power is supplied to the cam actuating electric motor 29), the motor torque of the electric motor 4 is applied to the reduction-transmission mechanism 5 via the motor shaft 42 and the reduction-transmission mechanism 5 operates. Then, in the reduction-transmission mechanism 5, the input members 50, 51 make circular motions with the eccentric amount δ in the direction of the arrow m₁ shown in FIG. 3.

Accordingly, the input member 50 rotates around the axis O₁ (the direction of the arrow n₁ shown in FIG. 3) while the external teeth 50c are meshed with the internal teeth 52c of the rotation force applying member 52, and the input member 51 rotates around the axis O₂ (the direction of the arrow l₁ shown in FIG. 3) while the external teeth 51c are meshed with the internal teeth 52c of the rotation force applying member 52. In this case, due to the rotation of the input members 50, 51, as shown in FIG. 3, the inner peripheries of the input member 50, which define the pin insertion holes 50b, contact races 550 of the needle roller bearings 55, and the inner peripheries of the input member 51, which define the pin insertion holes 51b, contact races 570 of the needle roller bearings 57.

Therefore, the revolving motions of the input members 50, 51 are not transmitted to the output members 53 and only the rotating motions of the input members 50, 51 are transmitted to the output members 53. Rotation force due to the rotating motions is output from the output members 53 to the differential case 30 as the torque of the differential case 30.

Thus, the rear differential 3 is actuated, and driving force based on the motor torque of the electric motor 4 is distributed to the rear axle shafts 106 shown in FIG. 1 and transmitted to the right and left rear wheels 105 to be used as driving force for starting or accelerating the four-wheel-drive vehicle 101.

When the four-wheel-drive vehicle 101 is shifted into the two-wheel-drive mode by disconnecting the rear differential 3 and the reduction-transmission mechanism 5 from each other, supply of electric power to the cam actuating electric motor 29 is interrupted. When supply of electric power to the cam actuating electric motor 29 is interrupted, cam thrust force P due to actuation of the cam mechanism 7 is not generated. Therefore, the clutch element 60 of the clutch 6 is moved and returned in a direction away from the clutch element 61 by the spring force of the return spring 63. Thus, meshing between the meshing lug portion 601a of the clutch element 60 and the meshing lug portion 61c of the clutch element 61 is cancelled. As a result, the rear differential 3 and the reduction-transmission mechanism 5 are disengaged from each other.

When the rear differential 3 and the reduction-transmission mechanism 5 are disengaged from each other, if the motor shaft 42 of the electric motor 4 is rotated at a speed slightly higher than a speed corresponding to a vehicle speed, meshing between the meshing lug portion 601a of the clutch element 60 and the meshing lug portion 61c of the clutch element 61 is smoothly cancelled.

In the case where the four-wheel-drive vehicle 101 is stopped in the four-wheel-drive mode in which the rear differential 3 is coupled to the reduction-transmission mechanism 5, if supply of electric power to the cam actuating electric motor 29 is interrupted at the time when the vehicle speed becomes lower than or equal to a predetermined value, the rear differential 3 and the reduction-transmission mechanism 5 are disconnected from each other. Thus, it is possible to reduce vibrations in the four-wheel-drive vehicle 101 when the four-wheel-drive vehicle 101 is stopped. That is, it is possible to prevent vibrations due to pulsation of torque caused by magnetic attraction force between an iron core (not shown) provided in the stator 40 of the electric motor 4 and a magnet (not shown) provided in the rotor 41 from propagating to the vehicle body via the rear differential 3. As a result, it is possible to reduce vibrations in the four-wheel-drive vehicle 101 when the four-wheel-drive vehicle 101 is stopped.

It is also possible to reduce vibrations when the four-wheel-drive vehicle 101 is stopped, by supplying the electric motor 4 with electric power for suppressing pulsation of torque in the electric motor 4.

In the case where the four-wheel-drive vehicle 101 is decelerated in the two-wheel-drive mode in which the rear differential 3 and the reduction-transmission mechanism 5 are disconnected from each other and electric power is not supplied to the electric motor 4, the rear differential 3 and the reduction-transmission mechanism 5 may be coupled to each other by driving the cam actuating electric motor 29 and rotation resistance force that is generated through regeneration of electric power due to the rotation of the motor shaft 42 of the electric motor 4 may be used as the braking force for the four-wheel-drive vehicle 101. In this case, if the motor shaft 42 of the electric motor 4 is rotated at a speed corresponding to the vehicle speed or at a speed slightly higher than the speed corresponding to the vehicle speed before the rear differential 3 is coupled to the reduction-transmission mechanism 5, it is possible to smoothly mesh the meshing lug portion 601a of the clutch element 60 with the meshing lug portion 61c of the clutch element 61.

In the above-described embodiment, the description is made on the case where the motor driving force transmission apparatus 1 is operated by causing the input members 50, 51 to perform circular motions in the direction of the arrow m₁. Alternatively, the motor driving force transmission apparatus 1 may be operated as in the above-described embodiment even when the input members 50, 51 are caused to perform circular motions in the direction of the arrow m₂. In this case, the rotating motion of the input member 50 is performed in the direction of the arrow n₂, and the rotating motion of the input member 51 is performed in the direction of the arrow l₂.

According to the above-described embodiment, the following advantageous effects are obtained.

(1) Axial movement of the output cam member 71 is performed while rotation of the output cam member 71 is restricted by the restricting members 9. Thus, the action of the output cam member 71 at the time when the cam mechanism 7 is actuated is only the moving action among the rotating action and the moving action. Therefore, it is possible to smoothly carry out shifting operation for shifting cam thrust force from the cam mechanism 7 to the clutch 6.

(2) The output cam member 71 is guided by the restricting members 9 in the direction of the axis O at the time when the cam mechanism 7 is actuated. Thus, an exclusive guide member is no longer necessary, which reduces the cost.

(3) Transmission of motor torque from the cam actuating electric motor 29 to the input cam member 70 is efficiently and reliably performed by the gear mechanism 74.

As described above, the motor driving force transmission apparatus according to the invention is described on the basis of the above-described embodiment. However, the invention is not limited to the above-described embodiment. The invention may be implemented in various other embodiments without departing from the scope of the invention. For example, the following modifications may be made.

(1) In the above-described embodiment, the description is made on the case where the cam mechanism 7 includes the rolling elements 72 that roll between the input cam member 70 and the output cam member 71. However, the invention is not limited to this configuration. The cam mechanism need not include rolling elements. In this case, the cam mechanism includes an input cam member and an output cam member, cam surfaces inclined with respect to the circumferential direction are respectively formed on the surface of the input cam member and the surface of the output cam member, which face each other, and the input cam member and the output cam member are moved away from each other in the axial direction as the cam surfaces slide with respect to each other.

(2) In the above-described embodiments, the description is made on the case where the invention is applied to the four-wheel-drive vehicle 101 that uses the engine 102 and the electric motor 4 as the driving sources. However, the invention is not limited to this configuration. The invention may also be applied to an electric vehicle, which is a four-wheel-drive vehicle or a two-wheel-drive vehicle, in which only an electric motor is used as a driving source. In addition, the invention may also be applied to a four-wheel-drive vehicle having first drive shafts that are driven by an engine and an electric motor and second drive shafts that are driven by an electric motor as in the above-described embodiment.

According to the invention, it is possible to smoothly carry out shifting operation for shifting cam thrust force from the cam mechanism to the clutch.
In a motor driving force transmission apparatus, a cam mechanism includes an input cam member that rotates upon reception of motor torque from a cam actuating electric motor and an output cam member that outputs cam thrust force through movement due to rotation of the input cam member, and rotation of the output cam member around an axis of a housing is restricted by a restricting member fixed to the housing.

## Claims

1. A motor driving force transmission apparatus, comprising:
a housing;
an electric motor that is arranged in the housing so as to extend on an axis of the housing, and that generates motor torque;
a differential mechanism that distributes driving force based on the motor torque of the electric motor;
a reduction-transmission mechanism that reduces a speed of rotation transmitted from the electric motor, and then transmits the driving force to the differential mechanism;
a clutch that couples the reduction-transmission mechanism and the differential mechanism to each other such that the reduction-transmission mechanism and the differential mechanism are disengageable from each other; and
a cam mechanism that applies cam thrust force, which is used as clutch actuating force, to the clutch, wherein
the cam mechanism includes an input cam member that rotates upon reception of torque from a cam actuating driving source and an output cam member that outputs the cam thrust force through movement due to rotation of the input cam member, and
rotation of the output cam member around the axis of the housing is restricted by a restricting member fixed to the housing.

2. The motor driving force transmission apparatus according to claim 1, wherein the cam mechanism is arranged such that the output cam member is movable on the axis of the housing along the restricting member.

3. The motor driving force transmission apparatus according to claim 1 or 2, wherein the input cam member of the cam mechanism is coupled to the cam actuating driving source via a gear mechanism.
